# EUROPÄISCHE PATENTANMELDUNG

(11) **EP 2 628 642 A2**
(43) Veröffentlichungstag der Anmeldung: **21.08.2013**
(21) Anmeldenummer: 13000763.6
(22) Anmeldetag: 14.02.2013
(51) Int. Cl.: B60Q 11/00, B60Q 1/30

(54) **Landwirtschaftliches Anbaugerät zum Koppeln mit einem Arbeitsfahrzeug**

(30) Priorität: 16.02.2012 DE 102012003148
(71) Anmelder: Alois Pöttinger Maschinenfabrik Ges.m.b.H., 4710 Grieskirchen (AT)
(72) Erfinder: Bumberger, Rainer, 4141 Pfarrkirchen (AT); Hofinger, Markus, 4721 Altschwendt (AT)
(74) Vertreter: Thoma, Michael

(57) **Zusammenfassung**

Die Erfindung betrifft ein landwirtschaftliches Anbaugerät (2) zum Koppeln mit einem Arbeitsfahrzeug (1). Das Anbaugerät weist wenigstens eine Lichtvorrichtung (21) auf, wobei die Funktionsfähigkeit der Lichtvorrichtung durch eine elektronische Steuervorrichtung (30) überwacht werden kann. Gemäß einem anderen Aspekt der Erfindung ermittelt die Steuervorrichtung (30) einen Betriebszustand eines Anbaugeräts (2) und/oder Arbeitsfahrzeugs (1) anhand von wenigstens einem Parameter. Im Anschluss daran wählt die Steuervorrichtung (30) abhängig von dem einen oder einem anderen Parameter kein, ein oder mehrere für den ermittelten Betriebszustand hinterlegte(s) Lichtsignal(e) aus.

## Beschreibung

Die Erfindung betrifft ein landwirtschaftliches Anbaugerät zum Koppeln mit einem Arbeitsfahrzeug nach dem Oberbegriff des Anspruchs 1 und ein Arbeitsfahrzeug nach dem Oberbegriff des Anspruchs 8. Ferner betrifft die Erfindung ein Verfahren zum Steuern einer Lichtvorrichtung eines landwirtschaftlichen Anbaugeräts.

Aus dem Stand der Technik ist eine Vielzahl von Anbaugeräten bekannt, die mit einem Arbeitsfahrzeug koppelbar sind. Dabei ist vom Gesetzgeber vorgeschrieben, dass an Anbaugeräten eine Lichtvorrichtung vorgesehen sein muss, damit diese auf öffentlichen Straßen fahren dürfen. Die an dem Anbaugerät vorgesehene Lichtvorrichtung ist über einen mehrpoligen Stecker an das Arbeitsfahrzeug angeschlossen, wobei die jeweiligen Pole mit Stromsignalen beaufschlagt werden können, um das entsprechende Licht zum Leuchten zu bringen. Bei der Lichtvorrichtung handelt es sich beispielsweise um eine Heckleuchte, die Standlichter, Bremslichter, Blinklichter und/oder Nebelschlusslichter aufweist.

Die in aus dem Stand der Technik bekannten Anbaugeräte weisen den Nachteil auf, dass der Fahrer des Arbeitsfahrzeugs den Funktionszustand der Lichtvorrichtung nicht kennt. Dies kann insbesondere bei defekten oder teilweise defekten Lichtvorrichtungen zu gefährlichen Situationen im Straßenverkehr führen.

Die Aufgabe der vorliegenden Erfindung besteht daher darin, ein Anbaugerät vorzusehen, das wenigstens den zuvor genannten Nachteil nicht aufweist. Eine weitere Aufgabe der Erfindung besteht darin, die Lichtvorrichtung derart anzusteuern, dass die Unfallgefahr verringert wird.

Die Aufgaben werden durch den jeweiligen Gegenstand der Ansprüche 1 und 2 und das Verfahren gemäß Anspruch 8 gelöst. Vorteilhafte Ausgestaltungen der Erfindung sind Gegenstand der Unteransprüche.

Erfindungsgemäß ist ein landwirtschaftliches Anbaugerät vorgesehen, das mit einem Arbeitsfahrzeug gekoppelt werden kann. Das Anbaugerät weist eine Lichtvorrichtung auf, die mit einer elektronischen Steuervorrichtung verbindbar ist. Die elektronische Steuervorrichtung überwacht die Lichtvorrichtung. Insbesondere überwacht die elektronische Steuervorrichtung, ob die Lichtvorrichtung Lichtsignale, wie z.B. Standlicht, Bremslicht, Blinklicht und Nebelschlusslicht, fehlerfrei ausführen kann oder beispielsweise ein Lichtmittel, insbesondere eine Glühlampe, der Lichtvorrichtung defekt ist, so dass eine fehlerfreie Ausführung der Lichtsignale nicht möglich ist.

Durch eine Überwachung der Funktionsfähigkeit der Lichtvorrichtung durch die elektronische Steuervorrichtung kann während des Betriebs des Arbeitsfahrzeugs und/oder des Anbaugeräts eine defekte oder eine wenigstens teilweise defekte Lichtvorrichtung auf einfache Weise erkannt werden. Somit können gefährliche Situationen im Straßenverkehr vermieden werden, da der Fahrer eine defekte oder teilweise defekte Lichtvorrichtungen frühzeitig erkennen und den Fehler dementsprechend beheben kann.

Gemäß einem anderen Aspekt der Erfindung ist ein landwirtschaftliches Anbaugerät vorgesehen, das mit einem Arbeitsfahrzeug gekoppelt werden kann. Das Anbaugerät weist eine Lichtvorrichtung auf, die mit einer elektronischen Steuervorrichtung gekoppelt sein kann. Dabei ermittelt die Steuervorrichtung einen Betriebszustand eines Anbaugeräts und/oder des Arbeitsfahrzeugs anhand von wenigstens einem Parameter. Ferner kann die Steuervorrichtung wenigstens ein Lichtsignal aus wenigstens zwei für den ermittelten Betriebszustand hinterlegten Lichtsignalen auswählen, wobei auch Betriebszustände auftreten können, bei denen kein Lichtsignal erforderlich ist. Es müssen nicht immer zwingend mehrere Lichtsignale zu jedem Betriebszustand hinterlegt sein. Wenn beispielsweise der Rückfahrscheinwerfer kaputt ist, leuchtet eben kein Licht beim Zurückfahren. Die Auswahl des Lichtsignals erfolgt abhängig von dem wenigstens einen Parameter, der für die Bestimmung des Betriebszustands verwendet wurde, und/oder von wenigstens einem anderen Parameter. Das durch die Steuervorrichtung ausgewählte Lichtsignal wird durch die Lichtvorrichtung, insbesondere durch in der Lichtvorrichtung vorgesehene Lichtmittel, ausgeführt.

Im Sinne der Erfindung wird als Anbaugerät ein Ladewagen, eine Presse und/oder eine Sämaschine, etc. verstanden. Natürlich werden als Anbaugeräte auch alle anderen landwirtschaftlichen Geräte verstanden, die mit einem Arbeitsfahrzeug gekoppelt werden können und gegebenenfalls selbst antriebslos ausgebildet sein können. Bei dem Arbeitsfahrzeug kann es sich um jedes Fahrzeug handeln, das in der Lage ist, das Anbaugerät zu bewegen. So kann das Arbeitsfahrzeug beispielsweise ein Schlepper sein.

Als Lichtsignal wird im Sinne der Erfindung das von wenigstens einem Lichtmittel ununterbrochen abgestrahlte Licht verstanden. So wird als Lichtsignal das Leuchten eines Bremslichts, eines Standlichts, eines Nebelschlusslichts und/oder eines Bremslichts und dergleichen bei entsprechender Betätigung eines Betätigungsmittels verstanden. Alternativ oder zusätzlich wird im Sinne der Erfindung als Lichtsignal auch die von einem oder mehreren Lichtmitteln in einer vorgegebenen Zeitdauer mehrmalige unterbrochene Leuchten des jeweiligen Lichtmittels verstanden. Insbesondere wird als Leuchtsignal das mehrmalige kurze Leuchten wenigstens eines der zuvor genannten Lichter verstanden. Dabei kann das von einem oder mehreren Lichtmitteln abgestrahlte Licht unterschiedliche Lichtstärken aufweisen und/oder unterschiedlich lang Leuchten.

Als Betriebszustand wird im Sinne der Erfindung der Zustand des Arbeitsfahrzeugs und/oder Anbaugeräts verstanden, in dem sich das Arbeitsfahrzeug und/oder Anbaugerät zum jeweiligen Zeitpunkt befindet oder in den das Anbaugerät und/oder Arbeitsfahrzeug überführt werden soll. So kann durch die Steuervorrichtung als Betriebszustand ermittelt werden, dass ein Bremsen, Abbiegen oder dergleichen durch das Arbeitsfahrzeug erfolgt oder erfolgen soll. Das Bestimmen des Betriebszustands kann durch Ermitteln von wenigstens einem Parameters erfolgen, der für den Betriebszustand charakteristisch ist. So kann als vorherrschender Betriebszustand beispielsweise ein Bremszustand oder ein Abbiegezustand ermittelt werden, wenn das Bremspedal bzw. ein Blinkhebel betätigt wird. Die Ermittlung des Abbiegezustands ist nicht auf die Betätigung des Blinkhebels beschränkt. So kann die Steuervorrichtung alternativ anhand weiterer Parameter den Abbiegevorgang erkennen und automatisch ein Blinken der Blinkerleuchte bewirken. Die Betriebszustände sind natürlich nicht auf den Bremszustand und den Abbiegezustand begrenzt.

Das Auswählen des Lichtsignals abhängig von dem für den Betriebszustand charakterisierenden Parameter und/oder einem anderen Parameter bietet den Vorteil, dass die Gefahr von Unfällen verringert wird. Insbesondere kann durch das ausgegebene Lichtsignal die Aufmerksamkeit der übrigen Verkehrsteilnehmer auf eine bestimmte Situation, wie beispielsweise ein Abbiegen und/oder ein Bremsen, des Anbaugeräts und/oder Arbeitsfahrzeugs erhöht werden. Somit können die Verkehrsteilnehmer auf einfache Weise über die aktuelle Situation informiert werden, so dass sich die Unfallgefahr verringert.

So ist es möglich, dass bei einem Betätigen des Bremspedals durch die Steuervorrichtung in einem ersten Schritt anhand der ermittelten Parameter der Bremsbetriebszustand ermittelt wird. Die Parameter zur Bestimmung des Bremszustands können ein Betätigen des Bremspedals und/oder die Stärke der Bremsbetätigung und/oder die Schnelligkeit der Betätigung des Bremspedals oder dergleichen sein. In einem zweiten Schritt kann durch die Steuervorrichtung ein Lichtsignal aus einer Vielzahl dem Betriebszustand, insbesondere Bremszustand, zugeordneten Lichtsignalen ausgewählt werden. So kann als Lichtsignal die Bremsleuchte abhängig von der Stärke des Bremsvorgangs mit unterschiedlicher Lichtstärke leuchten. Alternativ oder zusätzlich kann ein Lichtsignal ausgegeben werden, das aus einem mehrmaligen unterbrochenen Leuchten des Lichtmittels besteht. Beispielsweise ist vorstellbar, dass bei einem schnellen Bremsvorgang die Bremsleuchte schnell zu blinken beginnt. Natürlich ist es auch möglich, dass weitere Lichtmittel der Lichtvorrichtung aktiviert werden. So können beispielsweise bei einem starken Bremsen zusätzlich zum Bremslicht die Blinklichter aktiviert werden.

Bei der Bestimmung des auszugebenden Lichtsignals im zweiten Schritt kann zusätzlich ein für den Betriebszustand nicht charakterisierender Parameter berücksichtigt werden, der während des Betriebs des Anbaugeräts und/oder des Arbeitsfahrzeugs durch die Steuervorrichtung, insbesondere eine mit der Steuervorrichtung verbunde Messeinrichtung, ermittelt wird. So ist beispielsweise möglich, dass für den Fall, dass der Bremszustand ermittelt wird, weitere Funktionen des Anbaugeräts und/oder Arbeitsfahrzeugs, wie beispielsweise, ob ein Antiblockiersystem fehlerfrei funktioniert, überprüft werden. Das Ergebnis der Überprüfung kann als Parameter in der Auswahl des auszugebenden Lichtsignals berücksichtigt werden. Für den Fall, dass ermittelt wird, dass das Antiblockiersystem defekt ist, kann beispielsweise als Lichtsignal neben dem Leuchten der Bremsleuchte die Blinklichter und/oder ein anderes Lichtmittel zusätzlich leuchten.

Alternativ oder zusätzlich kann zur Bestimmung des auszugebenden Lichtsignals ein für den Betriebszustand nicht charakterisierender Parameter berücksichtigt werden, der vorgegeben und beispielsweise in der Steuervorrichtung hinterlegt ist. So kann beispielsweise die Länge des Gespanns, das sich aus dem Arbeitsfahrzeug und dem Anbaugerät zusammensetzt, bei der Auswahl eines für den ermittelten Betriebszustand hinterlegten Lichtsignals herangezogen werden. Insbesondere kann bei einem Gespann, das eine bestimmte Länge überschreitet, durch die Lichtvorrichtung ein besonderes Lichtsignal ausgegeben werden.

In einer bevorzugten Ausführung kann für den Fall, dass die Steuervorrichtung eine zumindest teilweise defekte Lichtvorrichtung ermittelt, dem Fahrer des Arbeitsfahrzeugs der Fehler in optischer und/oder akustischer Weise mitgeteilt werden.

Ferner kann die Steuervorrichtung veranlassen, dass bei einem defekten Lichtmittel der Lichtvorrichtung das Lichtsignal des defekten Lichtmittels durch ein nicht defektes Lichtmittel ausgeführt wird. So ist es vorstellbar, dass beispielsweise bei einem defekten Bremslicht das Nebelschlusslicht anstelle des Bremslichts leuchtet. Natürlich ist es zusätzlich möglich, dass die Leuchtstärke des nicht defekten Lichtmittels in diesem Fall höher oder kleiner ist als die Leuchtstärke des defekten Lichtmittels in einem fehlerfreien Betrieb. Somit reduziert sich die Gefahr von Unfällen, da sichergestellt ist, dass den Verkehrsteilnehmern ein beabsichtigtes Bremsen, Abbiegen und dergleichen auch bei einem defekten Lichtmittel mitgeteilt wird.

Die Steuervorrichtung kann durch ein Bussystem, insbesondere ein CAN-Bus, mit der Lichtvorrichtung verbunden sein. Somit kann die Lichtvorrichtung durch die Steuervorrichtung auf einfache Weise angesteuert werden. Zudem ist eine Überwachung der Funktionsfähigkeit der Lichtvorrichtung auf einfache Weise möglich. Für den Fall, dass die Steuervorrichtung in dem Arbeitsfahrzeug angeordnet ist, kann das Bussystem des Anbaugeräts durch eine entsprechende Schnittstelle mit dem Arbeitsfahrzeug verbunden werden.

Alternativ kann die Steuervorrichtung am Anbaugerät angeordnet sein. Dies bietet den Vorteil, dass die Lichtvorrichtung unabhängig von dem Arbeitsfahrzeug angesteuert werden kann. Natürlich sind auch Ausführungen möglich, in denen im Anbaugerät und im Arbeitsfahrzeug jeweils eine Steuervorrichtung angeordnet sind. Die einzelnen Steuervorrichtungen können unterschiedliche Funktionen der Lichtvorrichtung und/oder anderer Bauteile des Anbaugeräts und/oder Arbeitsfahrzeugs steuern. Insbesondere kann die Steuervorrichtung in der Lichtvorrichtung angeordnet sein. Dadurch kann die Steuervorrichtung in bereits vorhandene Bauteile integriert werden. Ferner kann die Funktionalität der Steuervorrichtung, nämlich die Überwachung der Lichtvorrichtung und/oder die oben beschriebene Ansteuerung der Lichtvorrichtung, in eine im Anbaugerät bereits vorhandene Elektronik integriert werden.

Weitere Einzelheiten und Vorteile der Erfindung sollen nun anhand eines in der Zeichnung dargestellten Ausführungsbeispiels näher erläutert werden.

Dabei zeigen
- Figur 1:: eine schematische Seitenansicht eines Arbeitsfahrzeugs mit Anbaugerät,
- Figur 2:: eine Schaltdarstellung der Steuervorrichtung, der Lichtvorrichtung und der Messeinrichtungen.

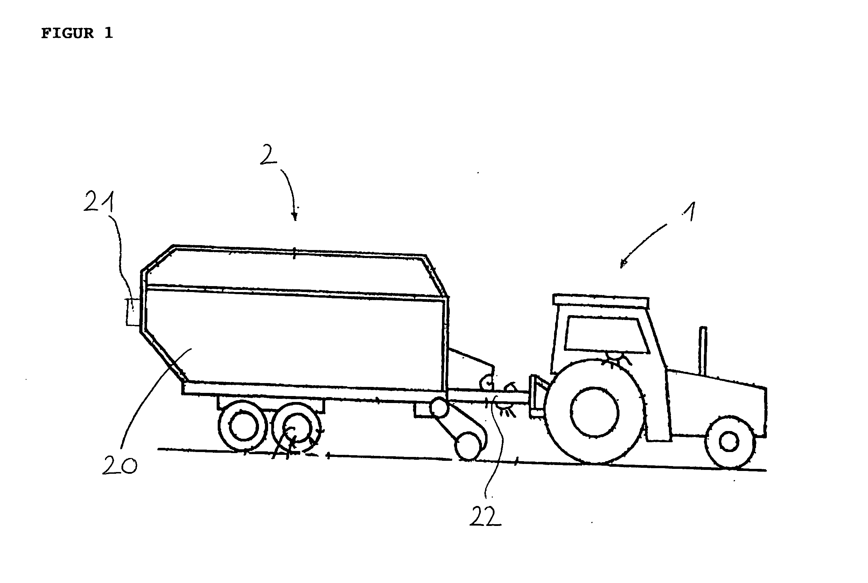

In Figur 1 ist ein Gespann dargestellt, das sich aus einem Arbeitsfahrzeug 1 und einem Anbaugerät 2 zusammensetzt. Bei dem Arbeitsfahrzeug 1 handelt es sich um einen Traktor und bei dem Anbaugerät 2 um einen Ladewagen. Das Arbeitsfahrzeug 1 ist über ein Kopplungsmittel 22 mit dem Anbaugerät 2 gekoppelt. Das Anbaugerät 1 weist an seiner von dem Arbeitsfahrzeug 1 abgewandten Seite eine Lichtvorrichtung 21 auf. Die Lichtvorrichtung 21 weist eine Vielzahl von nicht dargestellten Lichtmitteln auf und entspricht einer Heckleuchte. Die Heckleuchte weist ein Bremslicht, ein Standlicht, ein Blinklicht, ein Rücklicht und/oder ein Nebelschlusslicht auf.

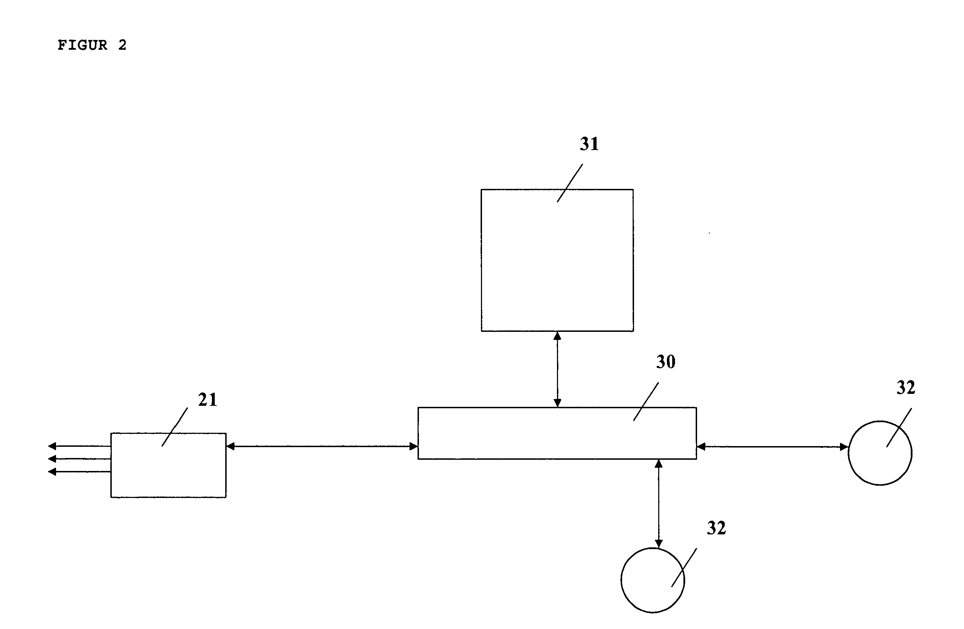

Dabei ist die Lichtvorrichtung 21 über ein Bussystem mit einer in Figur 2 dargestellten Steuervorrichtung 30 verbunden. Das Bussystem kann sich durch das Kopplungsmittel 22 erstrecken, um das Arbeitsfahrzeug, insbesondere eine im Arbeitsfahrzeug vorgesehene Steuervorrichtung, mit dem Anbaugerät, insbesondere mit der Lichtvorrichtung 21, zu verbinden.

Wie aus Figur 2 ersichtlich ist, ist die Steuervorrichtung 30 neben der Lichtvorrichtung 21 zusätzlich mit einem Speichermittel 31 verbunden. In dem Speichermittel sind die jedem Betriebszustand zugeordneten Lichtsignale hinterlegt. Ferner können noch weitere Werte in dem Speichermittel 31 hinterlegt sein, die unter anderem bei der Auswahl des durch die Lichtvorrichtung 21 auszuführenden Lichtsignals berücksichtigt werden können. Der Datenträger 31 kann sowohl außerhalb vom Steuergerät 30 als auch im Steuergerät sein, beispielsweise als Bestandteil der Platine bzw. des Prozessors.

Ferner ist die Steuervorrichtung 30 mit einer Vielzahl von Messeinrichtungen 32 verbunden, von denen in Figur 2 zwei dargestellt sind. Mittels der Messeinrichtungen 32 werden die Parameter bestimmt, die zur Ermittlung des Betriebszustands benötigt und/oder bei der Auswahl des für den Betriebszustand hinterlegten Lichtsignals berücksichtigt werden. So kann beispielsweise mittels einer Messeinrichtung 32 die Stärke und/oder Schnelligkeit der Betätigung eines Bremspedals gemessen werden. Mittels einer anderen Messeinrichtung 32 kann ermittelt werden, ob der Blinkerhebel betätigt ist oder nicht. Die Messeinrichtungen 32 können an dem Arbeitsfahrzeug 1 und/oder dem Anbaugerät 2 angeordnet sein.

Im Folgenden wird anhand der Figur 2 das Verfahren zur Steuerung der Lichtvorrichtung 21 erläutert. Die Steuervorrichtung 30 ermittelt mittels der Messeinrichtungen 32 wenigstens einen für den Betriebszustand des Anbaugeräts 2 und/oder Arbeitsfahrzeugs 1 charakterisierenden Parameter. In einem ersten Schritt überprüft die Steuervorrichtung 30 anhand der ermittelten Parameter, ob sich das Arbeitsfahrzeug 1 und/oder das Anbaugerät 2 in einem vorgegebenen Betriebszustand, wie beispielsweise einem Bremszustand, einem Abbiegezustand oder dergleichen, befindet.

Für den Fall, dass durch die Steuervorrichtung 30 ermittelt wird, dass sich das Arbeitsfahrzeug 1 und/oder das Anbaugerät 2 in einem vorgegebenen Betriebszustand befindet, wird in einem zweiten Schritt ein dem Betriebszustand zugeordnetes Lichtsignal aus dem Speichermittel 31 ausgewählt. Bei der Auswahl des Lichtsignals werden auch mittels der Messeinrichtungen 32 ermittelte Parameter, die unabhängig von dem Betriebszustand sind, berücksichtigt. Diese Parameter enthalten Informationen über beispielsweise die Funktionsfähigkeit eines Antiblockiersystem. Zudem können bei der Auswahl des Lichtsignals auch weitere von dem Betriebszustand unabhängige Parameter, wie z.B. die Länge des Gespanns, berücksichtigt werden. Diese Parameter können zusätzlich zu den Lichtsignalen in dem Speichermittel 31 abgespeichert sein.

Das von der Steuervorrichtung 30 ausgewählte Lichtsignal wird von der Lichtvorrichtung 21 ausgeführt.

## Patentansprüche

1. Landwirtschaftliches Anbaugerät (2) zum Koppeln mit einem Arbeitsfahrzeug (1), wobei das Anbaugerät (2) wenigstens eine Lichtvorrichtung (21) aufweist, die mit einer elektronischen Steuervorrichtung (30) verbindbar ist, **dadurch gekennzeichnet, dass** die elektronische Steuervorrichtung (30) die Lichtvorrichtung (21) überwacht.

2. Landwirtschaftliches Anbaugerät (2) zum Koppeln mit einem Arbeitsfahrzeug (1), wobei das Anbaugerät (2) wenigstens eine Lichtvorrichtung (21) aufweist, die mit einer elektronischen Steuervorrichtung (30) verbindbar ist, **dadurch gekennzeichnet, dass** die Steuervorrichtung (30) zumindest einen Betriebszustand des Anbaugeräts (2) und/oder des Arbeitsfahrzeugs (1) anhand von wenigstens einem Parameter ermittelt und abhängig von dem wenigstens einen und/oder wenigstens einem anderen Parameter aus wenigstens zwei für den ermittelten Betriebszustand hinterlegten Lichtsignalen wenigstens ein Lichtsignal auswählt, das die Lichtvorrichtung (21) ausführt.

3. Anbaugerät (2) nach Anspruch 1, **dadurch gekennzeichnet, dass** die Steuervorrichtung (30) durch ein Bussystem, insbesondere ein CAN-Bus, mit der Lichtvorrichtung (21) verbindbar ist.

4. Anbaugerät (2) nach Anspruch 2, **dadurch gekennzeichnet, dass** das Bussystem mit dem Arbeitsfahrzeug (1) verbindbar ist.

5. Anbaugerät (2) nach einem der vorhergehenden Ansprüche, **dadurch gekennzeichnet, dass** die Steuervorrichtung (30) am Anbaugerät (2) angeordnet ist.

6. Anbaugerät (2) nach einem der vorhergehenden Ansprüche, **dadurch gekennzeichnet, dass** die Steuervorrichtung (30) in der Lichtvorrichtung (21) angeordnet ist.

7. Anbaugerät (2) nach einem vorhergehenden Ansprüche, **dadurch gekennzeichnet, dass** das Anbaugerät (2) antriebslos ausgebildet ist.

8. Arbeitsfahrzeug (1) mit einem Anbaugerät (2) nach einem der vorhergehenden Ansprüche.

9. Verfahren zum Steuern einer Lichtvorrichtung (21) eines landwirtschaftlichen Anbaugeräts (2), das mit einem Arbeitsfahrzeug (1) koppelbar ist, wobei das Verfahren folgende Schritte aufweist:
- Bestimmen eines Betriebszustands des Arbeitsfahrzeugs (1) und/oder des Anbaugeräts (2) anhand von wenigstens einem Parameter,
- Auswählen wenigstens eines Lichtsignals aus wenigstens zwei für den ermittelten Betriebszustand hinterlegten Lichtsignalen abhängig von dem wenigstens einen Parameter und/oder wenigstens einem anderen Parameter,
- Ausführen des ausgewählten Lichtsignals durch die Lichtvorrichtung (21).

10. Computerprogrammprodukt, das das Verfahren nach Anspruch 8 ausführt.

11. Datenträger mit einem Computerprogrammprodukt nach Anspruch 9.
